(19) Europäisches Patentamt
European Patent Office
Office européen des brevets

(11) **EP 2 262 441 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **09727236.3**

(22) Anmeldetag: **03.04.2009**

(51) Int Cl.:
***A61C 13/00*** *(2006.01)*

(86) Internationale Anmeldenummer:
**PCT/EP2009/053999**

(87) Internationale Veröffentlichungsnummer:
**WO 2009/121952 (08.10.2009 Gazette 2009/41)**

(54) **VERFAHREN ZUR BEARBEITUNG EINES ROHLINGS MIT EINEM INDIVIDUELLEN VERGRÖSSERUNGSFAKTOR**

METHOD FOR PROCESSING A BLANK WITH AN INDIVIDUAL ENLARGEMENT FACTOR

PROCÉDÉ D'USINAGE D'UNE ÉBAUCHE AVEC UN FACTEUR D'AGRANDISSEMENT INDIVIDUEL

(84) Benannte Vertragsstaaten:
**AT CH DE FR GB LI**

(30) Priorität: **03.04.2008 DE 102008017473**
**24.04.2008 DE 102008020720**

(43) Veröffentlichungstag der Anmeldung:
**22.12.2010 Patentblatt 2010/51**

(73) Patentinhaber: **Sirona Dental Systems GmbH**
**64625 Bensheim (DE)**

(72) Erfinder:
• **GLEDITZSCH, Siegfried**
**64646 Heppenheim (DE)**
• **BASLER, Franz**
**69514 Laudenbach (DE)**
• **FIGGE, David**
**64625 Bensheim (DE)**

(74) Vertreter: **Sommer, Peter**
**PRIO Patentanwälte**
**Augustaanlage 22**
**68165 Mannheim (DE)**

(56) Entgegenhaltungen:
EP-A1- 1 067 880     EP-A1- 1 658 825
WO-A1-99/13796      WO-A1-03/007834
US-A- 4 615 678      US-A1- 2007 050 072

**Beschreibung**

Technisches Gebiet

Die Erfindung betrifft ein Verfahren zur Bearbeitung eines Rohlings unter Berücksichtigung eines individuellen Vergrößerungsfaktors sowie einen Rohling hierfür.

Stand der Technik

Dentale Restaurationen aus Zirkon- und Aluminiumoxid werden aus einem nur vorgesinterten Rohling zunächst vergrößert hergestellt und anschließend in einem Hochtemperaturofen unter Schwindung dicht gesintert. Der für die vergrößerte Herstellung notwendige Vergrößerungsfaktor wird für jede Charge, die mehrere Rohlinge umfasst, aus der Schwindung, also aus der Längenänderung beim Dichtsintern bestimmt. Unter dem Vergrößerungsfaktor ist dabei das Verhältnis $l_0/l$ zu verstehen, wobei $l_0$ die Ausgangsdimension vor dem Dichtsintern und $l$ die Enddimension nach dem Dichtsintern ist.

Anstelle des Vergrößerungsfaktors kann auch ein der Schwindung entsprechender Sinterschrumpfparameter ermittelt werden - für den Fachmann sind diese Größen austauschbar.

Die Genauigkeit des Vergrößerungsfaktors bzw. der Schwindung bestimmt wesentlich die Genauigkeit der Passung einer fertigen Restauration beim späteren Einsetzen in den Patientenmund. Ein entscheidender Faktor für die Ungenauigkeit des Vergrößerungsfaktors und damit der hergestellten Passung sind Unterschiede in der Dichte und damit der Schwindung innerhalb einer Charge, für die ein und derselbe Vergrößerungsfaktor angegeben wird.

Diese Dichte- bzw. Schwindungsunterschiede innerhalb einer Charge werden im Wesentlichen durch Schwankungen in den Fertigungsschritten Pressens und Vorsinterns verursacht. Zwar kann mit kleineren Chargengrößen beim Vorsintern die Genauigkeit des Vergrößerungsfaktors für alle Rohlinge einer Charge verbessert werden, der Aufwand ist jedoch beträchtlich.

Aus der EP 1 067 880 B1 ist bekannt, an einem Rohling aus poröser Keramik ein maschinell oder mit menschlichen Sinnesorganen erfassbaren Informationscode mit Daten zur individuellen Eingabe eines kompensierenden Vergrößerungsfaktors aufzubringen. Der Identifikationscode kann optisch, elektromagnetisch oder mechanisch-taktil erfassbar aufgebracht sein. Der Vergrößerungsfaktor ergibt sich aus dem Raumgewicht des vorgefertigten Rohlings und dem erreichbaren Raumgewicht nach der Sinterung. Aus dem Rohling aus poröser Keramik wird durch Materialabtrag ein vergrößertes Gerüst geformt und das fertig bearbeitete vergrößerte Grundgerüst wird dichtgesintert. Während des Sinterns schrumpf das Grundgerüst dem individuellen Vergrößerungsfaktor folgend linear ohne weitere Verformung oder Verzug.

In der EP 1 067 880 B1 ist weiterhin ein Verfahren zur Herstellung von auf wenigstens einen vorpräparierten Zahnstumpf aufpassbaren künstlichen Zahnersatz aus gepresstem, feinem Keramikpulver offenbart. Die Dimensionen der Oberfläche eines Grundgerüstmodells werden zur Kompensation der Schrumpfung beim Sintern in allen Raumrichtungen linear vergrößert. Der Vergrößerungsfaktor ergibt sich aus dem Raumgewicht des vorgefertigten Rohlings und dem erreichbaren Raumgewicht nach der Sinterung. Vorteilhafterweise wird auf dem Rohling selbst, seine Verpackung, eine Anhängeetikette oder einem Beipackzettel maschinell oder mit menschlichen Sinnesorganen erfassbarer Identifikationscode mit Daten zur individuellen Eingabe des kompensierenden Vergrößerungsfaktors aufgebracht.

Aus der EP 0 160 797 A1 ist ein Rohling zur Herstellung zahntechnischer Formteile bekannt, der einen zu bearbeitenden Rohlingskörper und einen Halter für diesen umfasst. An dem Halter sind Referenzflächen vorgesehen, die von der Bearbeitungsmaschine abtastbare, codierte Informationen über die Rohlingseigenschaften enthalten. In einem Touchiervorgang des Bearbeitungswerkzeugs an die Referenzfläche werden diese Informationen abgefragt.

Mit einem aus der EP 1 067 880 B1 bekannten individuellen Vergrößerungsfaktor kann eine Verbesserung der Qualität der Passung erreicht werden, da jedem Rohling sein individueller Vergrößerungsfaktor zugeordnet wird.

In der WO 03/007834 A1 ist ein Verfahren zur Herstellung von auf einen Zahnstumpf zu befestigenden Zahnersatz aus einem dreidimensional vermessenen und digitalisierten Positivmodell offenbart. Für die Herstellung von Zahnersatz aus Rohlingen, die nach der formgebenden Bearbeitung noch fertig gesintert werden müssen und dabei schrumpfen, ist das Verfahren besonders vorteilhaft, wenn die Daten des Positivmodells mit einem Vergrößerungsfaktor zur Kompensation von Schrumpfung oder Quellung des Materials beaufschlagt werden, insbesondere für eine gute Passform, wenn der Vergrößerungsfaktor nicht linear und/oder anisotrop ist. Eine besonders genaue Passform kann erhalten werden, wenn der Vergrößerungsfaktor durch eine dreidimensionale Transferfunktion $f(x, y, z)$ bestimmt ist, wobei die Transferfunktion durch die dreidimensionale Dichteverteilung des Keramikrohlings bestimmt ist. Eine weitere vorteilhafte Weiterbildung sieht vor, dass durch das Einlesen der Transferfunktion oder der Dichteverteilung von einem Datenträger auf ein Barcodeetikett das Verfahren automatisiert wird.

In der US 2007/0050072 A1 ist ein Rohling für die Herstellung eines Zahnersatzteils durch Bearbeitung des Rohlings offenbart, wobei der Rohling mit für die Bearbeitung relevanten Information versehen ist. Ein die Informationen enthaltender, mit dem Rohling verbundener Speicher ist derart ausgebildet, und an dem Rohling angeordnet, dass die Informationen immer funktional auslesbar sind. Dabei sind im Speicher Informationen über Schrumpfungsparameter, sowie Angaben enthalten, wie beispielsweise über die Härte des Materials, das verwendete Material, die Korngröße, die Blockgröße, die Blockform, die Farbe, die Schichtung, die Ausrichtung, Seriennummer, Hersteller oder andere Identifikationsmerkmale des Einzelstücks. Aus diesen Informationen werden die Bearbeitungsgeschwindigkeit, das zu verwendende Werkzeug, die Mindestwandstärke und andere für die Bearbeitung wichtige Größen abgeleitet.

In der US 4,615,678 ist ein Rohlingskörper mit einem Abschnitt offenbart, der vorzugsweise als Ansatzstück ausgebildet ist, das mit Referenzflächen versehen ist. Dieser Abschnitt dient als Halter zum Einsetzen des Rohlings in eine Spannzange für die materialabhebende Bearbeitung des Rohlings. Der Halter dient dazu, den Rohling immer in einer eindeutigen Lage mittels der Anschlagflächen in einem Bearbeitungsgerät einzuspannen, um gleichzeitig den Rohling exakt zentrieren zu können. Dies ist vor allem wichtig beim wiederholten Bearbeiten mehrerer gleicher oder zueinander passender Teile. Der Halter weist ferner eine sogenannte Eichstelle auf, welche es erlaubt, die Lage und die kritische Abmessung des Bearbeitungswerkzeugs, wie den Durchmesser der Schleifscheibe, bestimmen zu lassen, indem die Eichstelle jeweils touchiert bzw. angefahren wird.

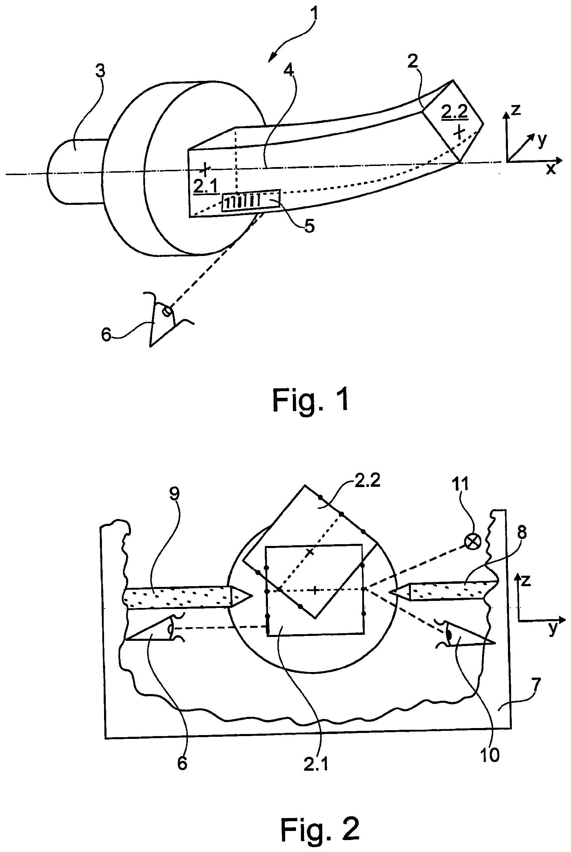

In der EP 1 658 825 A1 ist ein System und ein Verfahren für die Herstellung von Zahnersatz, wie Brücken und Kronen, offenbart. Insbesondere bezieht sich das Verfahren auf die Verwaltung von mehreren Bearbeitungsaufträgen für die gezielte Herstellung von Zahnersatz in einem System, das aus einer Vielzahl von Bearbeitungsgeräten besteht. In Fig. 2 ist eine Materialeinheit dargestellt, die einem Materialrohling und einen Stützkörper für das Halten des Materialrohlings umfasst. Die Materialeinheit weist einen eindeutigen Identifikationscode auf. Jedes Material hat einen anderen Identifikationscode. Dieser Identifikationscode kann eine Seriennummer oder ein Code sein, der es erlaubt, das Material zu identifizieren. Darüber hinaus weist die Materialeinheit einen weiteren Code auf, der die Materialeigenschaften und spezifische Merkmale für die Herstellung bezüglich dieses bestimmten Materialblocks enthält. Solche Informationen können dann verwendet werden, um beispielsweise den Sinterschwund zu bestimmen und geeignete Werkzeuge für die Bearbeitung auszusuchen.

In der WO 99/13796 ist ein Verfahren zur Herstellung von Dentalrestaurationen offenbart. Das Verfahren beinhaltet den Schritt, dass numerische Informationen über die Geometrie der gewünschten Dentalwiderherstellung mit Informationen über die Geometrien der verfügbaren Rohlinge verglichen werden, Informationen über die Farbe der gewünschten Wiederherstellung mit den Informationen über die Farbe der verfügbaren Rohlinge verglichen werden und dass diejenigen Rohling ausgewählt werden, die bezüglich der Farbe und der Geometrie am besten zur geplanten Dentalrestauration passen. Gemäß einer Ausführungsform ist ein Identifikationscode auf dem Rohling angebracht, wobei der Code eine ebene Fläche aufweist, die in einem bekannten Abstand von der Achse des Rohlings, der kleiner als der Radius eines Anlageteils ist, angeordnet ist. Durch das Ablesen der Dimensionen der Länge und der Breite der ebenen Fläche werden zwei Koordinaten gewonnen, die dem charakteristischen Informationen des individuellen Rohlings entsprechen, die in einem Code-Schlüssel abgelegt sind. Vorteilhafterweise kann die ebene Fläche mit einem Laser abgelesen werden. Die Code-Informationen können auch an einer anderen Stelle auf dem Rohling angeordnet sein, beispielsweise in Form eines Barcodes oder einer Nut oder eines Kamms.

Die Aufgabe der Erfindung besteht darin, eine Verbesserung der Passgenauigkeit dentaler Restaurationen dadurch sicher zustellen, dass bei der Bearbeitung jedes Rohlings einer durch Vorsinterung produzierten Charge, aus dem eine dentale Restauration herausgearbeitet wird, ein individueller Vergrößerungsfaktor für jeden Rohling berücksichtigt wird.


Darstellung der Erfindung


Mit einem erfindungsgemäßen Verfahren und mit einem zur Durchführung dieses Verfahrens ausgebildeten Rohling lässt sich die Passgenauigkeit von herzustellenden dentalen Restaurationen verbessern. Die Rohlinge werden auch als Block bezeichnet und stellen Formköper dar, die für eine Gruppe von Rohlingen jeweils typische Abmessungen aufweisen, wobei die Rohlinge als solche eine beliebige Geometrie aufweisen können, d.h. nicht nur quaderförmige Blöcke kommen in Frage, sondern auch zylinderförmige und andere Blöcke.

Die Erfindung betrifft demnach ein Verfahren zur Bearbeitung eines Rohlings gemäß Anspruch 1, wobei der Rohling nach der Bearbeitung unter Schwindung dichtgesintert wird. Die Bearbeitung des Rohlings in einer Bearbeitungsmaschine erfolgt unter Berücksichtigung eines Vergrößerungsfaktors zum Ausgleich der Schwindung beim anschließenden Dichtsintern. Als Vergrößerungsfaktor wird ein auf den konkreten Rohling einer Produktionscharge bezogener individueller Vergrößerungsfaktor verstanden. Zur Bestimmung des Vergrößerungsfaktors erfolgt eine Längenmessung des Rohlings in einer oder mehreren der Dimensionen Länge, Breite und Höhe.

Das gemessene Längenmaß steht in einer vorbekannten Beziehung zu dem Vergrößerungsfaktor, wobei der Typ des Rohlings bekannt ist.

Die Längenmessung des Rohlings erfolgt in der Bearbeitungsmaschine entweder mittels eines Touchierprozesses eines Werkzeugs an dem Rohling oder durch eine berührungslose, beispielsweise optische Vermessung. In ersterem Fall ist es nicht unbedingt erforderlich, in der Bearbeitungsmaschine einen Scanner zur Erfassung eines Strichcodes vorzusehen.

Für die Bestimmung des Vergrößerungsfaktors wird dann, wenn ein erstes Längenmaß in einer ersten Dimensionen y ermittelt wird, das außerhalb eines Toleranzbereich liegt, mindestens eine Längenmessungen in mindestens einer anderen Dimension x, z vorgenommen und ein Vergrößerungsfaktor bestimmt. Dadurch können auch nicht-ideale Rohlinge als Werkstück bearbeitet werden.

Die Ermittlung des Vergrößerungsfaktors über eine Längenmessung zur Feststellung des individuellen Volumens des Rohlings ist in der Technischen Keramik zwar an sich seit langem bekannt. Die Ermittlung über mehrere Längenmessungen für jeden Rohling der Charge und die Anbringung des individuellen Vergrößerungsfaktors am Rohling stellt jedoch einen aufwendigen Prozessschritt dar.

Die Erfindung geht davon aus, dass der Rohlingstyp und die diesem Rohlingstyp zugeordneten erwarteten Eigenschaften zum Zeitpunkt der Längenmessung bekannt sind und dass zwischen dem festgestellten Längenmaß und dem Vergrößerungsfaktor eine von diesem Rohlingstyp abhängige Beziehung besteht, die für die vergrößerte Bearbeitung verwendet wird.

Als erwartete Eigenschaft ist hier beispielsweise das Längenmaß nach der Dichtsinterung eines Rohlings aus dieser Charge zu nennen, aus dem dann beispielsweise ein Vergrößerungsfaktor direkt berechnet oder aus einer Tabelle abgeleitet werden kann. Diese erwartete Eigenschaft kann auch als chargenbezogene Information an dem Rohling selbst oder in dessen Begleitpapieren angebracht sein und muss dann vor der Bearbeitung an die Bearbeitungsmaschine übermittelt werden.

Die Ermittlung des individuellen Vergrößerungsfaktors in der Maschine gemäß der Erfindung hat den Vorteil, dass ohne einen zusätzlichen Fertigungsschritt beim Hersteller für jeden Rohling der Charge der Vergrößerungsfaktor bzw. die Schwindung bestimmt werden kann.

Die Ermittlung in der Maschine hat weiterhin den Vorteil, dass unbeabsichtigte Verwechslungen nach dem Einsetzen des Rohlings ausgeschlossen werden können.

Gemäß der Erfindung kann der Rohling vorgesintert oder auch nur gepresst sein, also ohne Vorsinterung vorliegen und aus einem keramischen oder metallischen Werkstoff bestehen.

Bei der Vermessung mehrerer Dimensionen erhält man für jede vermessene Dimension einen separaten Vergrößerungsfaktor.

Vorteilhafterweise kann die Längenmessung für ein, zwei oder alle drei Dimensionen erfolgen.

In einer vorteilhaften Weiterbildung werden für die genauere Bestimmung des Vergrößerungsfaktors mindestens zwei oder alle drei Dimensionen des Rohlings vermessen.

Über eine Mittlung aus der durch mehrere Messungen erhaltenen größeren Menge an Messwerten kann die Genauigkeit des Vergrößerungsfaktors erhöht werden.

Die Berücksichtigung der Schwindung für jede Raumrichtung separat ist insbesondere bei anisotrop schwindenden Rohlingen von Bedeutung.

Insbesondere bei anisotropen Werkstoffen kann die Genauigkeit dann verbessert werden, wenn der individuelle Vergrößerungsfaktor für jede Dimension getrennt festgestellt und für die für jede Dimension getrennt durchgeführte Berechnung des durch Bearbeitung des Werkstücks vergrößert herzustellenden Bauteils berücksichtigt wird.

Sollte eine Korrektur des Vergrößerungsfaktors für die einzelnen Raumrichtungen notwendig sein, kann die Korrektur über vorab bestimmte Korrekturwerte erfolgen.

Selbst für den Fall, dass der Rohling keine exakten Einheitsmaße aufweist, z.B. leicht gebogen, kann durch eine Vermessung der anderen Dimensionen ein Vergrößerungsfaktor bestimmt werden.

In einer vorteilhaften Weiterbildung werden für die Bestimmung des Längenmaßes in einer ersten der Dimensionen mehrere Längenmessungen in einem Abstand zueinander bezüglich mindestens einer anderen Dimension vorgenommen und aus den mehreren Längenmessungen wird ein Längenmaß für die Dimension in dieser Richtung bestimmt. Unterschiede in der ersten Dimension können damit ausgeglichen werden.

Vorteilhafterweise können auf dem Werkstück Korrekturfaktoren für Unterschiede des Vergrößerungsfaktors in den einzelnen Raumrichtungen x, y, z erfassbar angebracht sein und können diese Korrekturfaktoren bei der Ermittlung des Vergrößerungsfaktors berücksichtigt werden.

Offenbart wird auch ein Rohling aus einem durch Sintern unter Schrumpf zu verdichtendem Werkstoff. Dieser Rohling weist einen Informationscode mit chargenbezogenen Daten auf, wobei der Informationscode Korrekturparameter für den Schrumpf zwischen den einzelnen Raumrichtungen x, y, z enthält.

Mit einem derartigen Rohling lassen sich chargenspezifische Anisotropien des Werkstoffs mit vertretbarem Aufwand bei der Herstellung des vergrößerten Bauteils durch Herausarbeiten aus dem Rohling berücksichtigen und damit die Genauigkeit verbessern.

In dem Informationscode kann die Masse des Rohlings bzw. eines Rohlingskörpers als Teil des Rohlings enthalten sein. Weiterhin können andere chargenbezogene Werte wie die Pressparameter oder die Parameter der Vorsinterung enthalten sein.

Kurze Beschreibung der Zeichnungen

In der Zeichnung ist ein Ausführungsbeispiel der Erfindung dargestellt. Es zeigt:

Fig. 1    ein Werkstück in Form eines Rohlings mit einem Rohlingskörper und einem Halter,

Fig. 2    eine Draufsicht auf das in eine Bearbeitungsmaschine mit zwei Bearbeitungswerkzeugen eingebrachte Werkstück aus Fig. 1,

Fig. 3 eine Stirnfläche des Rohlings aus Fig. 1

Ausführungsbeispiel

In Fig. 1 ist ein Werkstück zur Herstellung eines dentalen Restaurationskörpers dargestellt. Das Werkstück ist ein Rohling 1 mit einem Rohlingskörper 2 und mit einem daran befestigten Halter 3 zum Anbringen in einer nicht dargestellten Bearbeitungsmaschine.

Als Material für die Werkstücke kommen keramische, aber auch metallische Werkstoffe in Betracht, wobei die Werkstücke teil-gesinterte Rohlinge aber auch nur gepresste Rohlinge, die auch als Grünling bezeichnet werden, sein können. Die Werkstücke werden nach einer CAM-Bearbeitung zur Herstellung eines gewünschten Bauteils mit Schwindung dichtgesintert werden. Die Bearbeitung des vorgesinterten Rohlings kann dabei materialabtragend, etwa durch Fräsen oder Schleifen erfolgen.

Der dargestellte Rohlingskörper 2 ist vorgesintert und ist in Abweichung gegenüber einem Idealmaß als Folge der Vorsinterung sowohl um eine Mittelachse 4 verdreht und als auch noch um die Mittelachse gebogen dargestellt.

An dem Rohlingskörper 2 ist ein Informationscode in Form eines Strichcodes 5 angebracht, der beispielsweise mit einem Scanner 6 außerhalb oder innerhalb einer Bearbeitungsmaschine ablesbar ist.

In diesem Code können an dem Rohling angebrachte Korrekturfaktoren für Unterschiede des Vergrößerungsfaktors in den einzelnen Raumrichtungen x, y, z enthalten sein, die bei der Bestimmung des Vergrößerungsfaktors berücksichtigt werden. Diese Korrekturfaktoren können chargenabhängig oder materialtypisch bedingt sein.

In Fig. 2 ist die Draufsicht auf das Werkstück 2 in eine Bearbeitungsmaschine 7 mit zwei Bearbeitungswerkzeugen 8, 9 aus Fig. 1 gezeigt, wobei die Abweichung vom Idealzustand durch die beiden Stirnflächen 2.1, 2.2 des Rohlingskörpers 2 verdeutlicht wird. Zum Zweck der besseren Übersichtlichkeit sind die Seitenflächen des Rohlingskörpers 2 weggelassen.

Die Lage des Rohlingskörpers wird über zwei Bearbeitungswerkzeuge 8,9 durch Touchieren am Rohlingskörper 2 erfasst. Dadurch ist eine Längenmessung in einer Raumrichtung y möglich. Bei nur einem Bearbeitungswerkzeug 8, 9 muss der Rohling um 180° gedreht werden, um aus zwei Messungen und dem bekannten Abstand zur Drehachse des Rohlings das Längenmaß zu bestimmen.

Anstelle eines Touchiervorgangs mit einem Werkzeug kann auch eine Vermessung mit einer berührungslosen Vermessungseinrichtung erfolgen, dargestellt in Fig. 2 als optische Vermessung mit einem Sensor 10 und mit einer punktförmigen Lichtquelle 11.

Um versatzbedingte Ungenauigkeiten auszugleichen, können mehrere Touchiervorgänge an mehreren, in x- oder z-Richtung zueinander beabstandeten Positionen erfolgen, dargestellt durch die Kreise. Durch Mittelung der durch mehrmaliges Vermessen in derselben Dimension y gewonnenen Werte kann ein Mittelwert für das Längenmaß $l_0$ bereitgestellt werden, aus dem der Vergrößerungsfaktor abgeleitet werden kann.

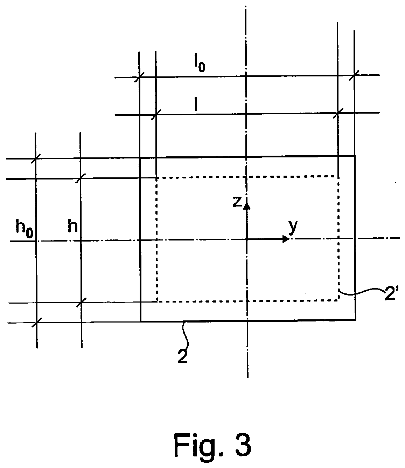

In Fig. 3 ist dargestellt, dass in unterschiedlichen Raumrichtungen z, y unterschiedliche Vergrößerungsfaktoren zu berücksichtigen sein können, wenn die Schwindung des Rohlings 2 bei der Sinterung nicht isotrop sein sollte. Die eventuellen unterschiedlichen Vergrößerungsfaktoren für die drei Raumrichtungen können mittels jeweils einer Messung für jede der drei Richtungen ermittelt werden. Dargestellt sind hier die Längenmaße $l_0$ und $h_0$ des Rohlings 2 in der y-z-Ebene sowie die Längenmaße l und h des dichtgesinterten Rohlings 2'.

Bei anisotroper Schwindung gibt es auch die Möglichkeit der Bestimmung des Unterschiedes zwischen den Raumrichtungen außerhalb der Maschine vorab als chargenabhängiger Wert oder als theoretischer Materialwert an sich.

Bei einer isotropen Schwindung ist das nicht notwendig, es ist vielmehr ausreichend, wenn die Bestimmung nur in einer Dimension erfolgt oder alle drei Dimensionen zu einem Vergrößerungsfaktor F verarbeitet werden und durch die größere Anzahl an Messwerten die Genauigkeit des Vergrößerungsfaktors F verbessert wird.

Der individuelle Vergrößerungsfaktor F kann durch Vergleich des gemessenen Längenmaßes lo mit einem für dieses Werkstück vorgegebene, nach dem Dichtsintern zu erwartenden Längenmaß l bestimmt werden, hier dargestellt in der Raumrichtung y.

Ausgehend von einem bekannten Typ des Rohlings 2 mit einem bekannten typischen Längenmaß l kann das gemessene Längenmaß $l_0$ unter Annahme eines linearen Schrumpfs unmittelbar zu dem Vergrößerungsfaktor F führen.

Diese rohlingstypische Abmessung 1 kann, gegebenenfalls zusammen mit anderen Rohlingseigenschaften, in der Steuerungssoftware der Bearbeitungsmaschine hinterlegt sein und vor der Bearbeitung des Werkstücks in der Bearbeitungsmaschine wird der Vergrößerungsfaktor F von dieser unter Verwendung des gemessenen Längenmaßes $l_0$ ermittelt.

Im Fall einer Längenänderung gilt für den Vergrößerungsfaktor F die Beziehung $F = l_0/l$, wobei $l_0$ die Ausgangslänge vor der Sinterung und l die Länge nach der Sinterung ist.

Für die Schwindung gilt die Formel $S = (l_0 - l)/l$. Üblicherweise wird der Sinterschrumpf oder die Schwindung in Form eines Vergrößerungsfaktors F von der Software der Bearbeitungsmaschine verarbeitet.

Beispielsweise kann bei einem Endmaß l von 10 mm und bei einem Längenmaß $l_0$ von 12 mm unmittelbar der Vergrößerungsfaktor F als 1,2 bestimmt werden. Die Schwindung ist in diesem Fall 0,2 oder 20 %.

Zusätzlich oder alternativ kann die werkstücktypische Korrelation zwischen dem gemessenen Längenmaß $l_0$ und dem Vergrößerungsfaktor F in der Software hinterlegt sein, beispielsweise in Form einer Funktion oder einer Tabelle.

Auch die Berechnung des Vergrößerungsfaktors Fx,y,z als Vergrößerungsfaktor für die Raumrichtungen x, y und z geht von einer Beziehung $F = l_0/l$ aus, wobei $l_0$ eine in einer der Raumrichtungen gemessene Länge vor der Dichtsinterung ist, die in der Bearbeitungsmaschine gemessen wird. l ist die erwartete theoretische Länge nach der Dichtsinterung und wird beispielsweise aus einer Datenbank für den jeweiligen Typ des Rohlings entnommen.

Allgemein gilt, dass aus der Masse m des jeweiligen Typs des Rohlings und aus einer festgestellten Dichte Ds der dichtgesinterten Keramik der Vergrößerungsfaktor bestimmt werden kann. Dies bedeutet, dass bei konstanter Blockmasse m bei einer bekannten tatsächlichen Blockgröße die Schwindung des Werkstücks bzw. des daraus hergestellten Teils aus einer gemessenen Länge $l_0$, gegebenenfalls auch aus mehreren Längen, berechnet werden kann.

Alternativ dazu kann der Vergrößerungsfaktor F aus einer vorbekannten Korrelation $F = f(l_0)$ zwischen dem Vergrößerungsfaktor F und der gemessenen Länge $l_0$ ermittelt werden, beispielsweise nach der Formel Fx,y,z = a * $l_0$ + b, wobei die Parameter a, b aus einer vorherstimmten Korrelation für den jeweiligen Typ des Rohlings bekannt sind.

In diesem Fall besteht zwischen dem Längenmaß $l_0$ und dem Vergrößerungsfaktor F für jeden Blocktyp eine bekannte Korrelation. Diese Korrelation hängt maßgeblich von der Kombination Pressen und Vorsintern der Rohlinge vor der Bearbeitung in der Bearbeitungsmaschine ab.

Im Ausführungsbeispiel 1 erfolgt die Bestimmung des Vergrößerungsfaktors aus Ds und m und drei Faktoren. Als Rohling kommt ein Block mit den Maßen Länge $l_0$, Breite $b_0$ und Höhe $h_0$ zum Einsatz. Die Länge $l_0$ des Rohlings wird in der Bearbeitungsmaschine bei einem Touchierprozess bestimmt. Die Masse m des Rohlings ist für die gesamte Charge vorab bekannt und konstant. Die Dichte $D_s$ des Rohlings nach der Dichtsinterung ist für das verwendete Material und für den Rohlingstyp ebenfalls bekannt und konstant.

Die Länge l eines kubischen Rohlings nach der Dichtsinterung kann wie folgt berechnet werden, wobei m die Blockmasse und V das Blockvolumen nach der Dichtsinterung bedeutet:

$$D_s = m \ / \ V = m \ / \ l^3$$

$$l^3 = m \ / \ D_s$$

$$l = (m \ / \ D_s)^{1/3}$$

Aus der gemessenen Länge $l_0$ des Rohlings und der berechneten Länge l nach der Dichtsinterung kann der Vergrößerungsfaktor F für die Dimension Länge nach $F = l_0/l$ berechnet werden. Die Berechnung der Faktoren für die Dimensionen Breite und Höhe erfolgt auf analoge Weise.

Die Vergrößerungsfaktoren für die drei Dimensionen werden anschließend von der Bearbeitungssoftware zu vergrößerten Herstellung des Teiles verwendet.

Im Ausführungsbeispiel 2 erfolgt die Bestimmung des Vergrößerungsfaktors F aus einer Korrelation der Ausgangsgrößen als $F = f(l_0, b_0, h_0)$. Für das verwendete Material und für den Rohlingstyp ist diese Korrelation zwischen dem Vergrößerungsfaktor und den Längenmaßen Länge, Breite und Höhe vorab bekannt. Zur Anwendung kommt ein Rohling wie in Beispiel 1. Ebenso wird wie in Beispiel 1 in einem Touchierprozess eine der Dimensionen Länge, Breite und Höhe bestimmt.

Die Korrelation ist als mathematische Funktion oder als Datentabelle in einer Software hinterlegt und damit können für jeden einzelnen Rohling aus dem gemessenen Rohlingsmaß und der genannten Korrelation der Vergrößerungsfaktor für die jeweilige Dimension oder bei linearer Schrumpfung ausgehend von einer Dimension für alle Dimensionen bestimmt werden.

Im Ausführungsbeispiel 3 erfolgt die Bestimmung des Vergrößerungsfaktors aus allen Dimensionen. Zur Anwendung kommt ein Rohling nach Beispiel 1 oder 2. Zur Erhöhung der Genauigkeit des Vergrößerungsfaktors wird in dem Touchierprozess aus allen drei Dimensionen, also Länge $l_0$, Breite $b_0$ und Höhe $h_0$ zusammen ein Vergrößerungsfaktor für alle drei Dimensionen bestimmt. Aufgrund der größeren Anzahl an Messdaten ergibt sich eine Verbesserung der Genauigkeit des Vergrößerungsfaktors.

Bei anisotroper Schwindung können die Unterschiede in der Schwindung der einzelnen Raumrichtungen vorab als chargenbezogener Wert bestimmt und in einem Barcode auf dem Rohling hinterlegt werden. Auch andere chargenbezogenen Größen können dort abgespeichert sein.

Im Ausführungsbeispiel 4 erfolgt die Bestimmung des Vergrößerungsfaktors für einen krummen Rohling gemäß Fig. 1, z.B. ist der Rohling in der Länge verzogen. Der verwendete Rohling weist als Folge der Vorsinterung in der für die Längenmessung vorgesehenen Dimension x eine Abweichung vom Idealmaß auf. Aus der Längenmessung nach Beispiel 1 bis 3 kann dann aus einem Längenmaß einer anderen Dimension y, z, etwa aus der Breite und/oder aus der Höhe doch noch ein Vergrößerungsfaktor bestimmt werden. Dabei kann insbesondere die Verwendung von chargenbezogenen Informationen über Abweichungen von einer isotropen Schwindung zu einer Verbesserung führen.

Auch eine Mittelung über die aus den Längenmaßen gewonnenen Vergrößerungsfaktoren in einer oder mehreren anderen Dimensionen y, z kann zu einem brauchbaren Vergrößerungsfaktor auch für die Dimension x führen, in der das Längenmaß selbst unbrauchbar war.

**Patentansprüche**

1. Verfahren zur Bearbeitung eines Rohlings (1), wobei der Rohling (1) nach der Bearbeitung unter Schwindung dichtgesintert werden kann und wobei die Bearbeitung des Rohlings (1) in einer Bearbeitungsmaschine (7) unter Berücksichtigung eines auf den Rohling (1) bezogenen individuellen Vergrößerungsfaktors (F) zum Ausgleich der Schwindung beim Dichtsintern erfolgt, **dadurch gekennzeichnet, dass** zur Bestimmung des individuellen Vergrößerungsfaktors (F) eine Längenmessung des Rohlings (1) in einer oder mehrerer der Dimensionen Länge, Breite und Höhe erfolgt, wobei aus dem gemessenen Längenmaß ($l_0$, $b_0$, $h_0$) und einer vorbekannten Beziehung zwischen dem Längenmaß und dem Vergrößerungsfaktor der individuelle Vergrößerungsfaktor (F) berechnet wird, wobei der Typ des Rohlings (1) bekannt ist, wobei die Längenmessung des Rohlings (1) in der Bearbeitungsmaschine (7) mittels eines Touchierprozess eines Werkzeugs (8, 9) an den Rohling (1) oder durch berührungslose Vermessung erfolgt, wobei für die Bestimmung des Vergrößerungsfaktors ein erstes Längenmaß ($l_0$, $b_0$, $h_0$) in einer ersten Dimensionen (y) ermittelt wird und dass dann, wenn dieses Längenmaß außerhalb eines Toleranzbereichs liegt, mindestens eine Längenmessungen in mindestens einer anderen Dimension (x, z) vorgenommen und ein Vergrößerungsfaktor bestimmt wird.

2. Verfahren nach Anspruch 1, **dadurch gekennzeichnet, dass** die vorbekannte Beziehung zwischen dem Längenmaß und dem Vergrößerungsfaktor für einen bestimmten Rohlingstyp des Rohlings (1) besteht und der individuelle Vergrößerungsfaktor (F) direkt berechnet wird.

3. Verfahren nach Anspruch 1, **dadurch gekennzeichnet, dass** die vorbekannte Beziehung zwischen dem Längenmaß und dem Vergrößerungsfaktor für einen bestimmten Rohlingstyp des Rohlings (1) besteht und der individuelle Vergrößerungsfaktor (F) aus einer Tabelle abgeleitet wird.

4. Verfahren nach einem der Ansprüche 1 bis 3, **dadurch gekennzeichnet, dass** der Rohling (1) vorgesintert oder nur gepresst wurde und dass der Rohling (1) aus einem keramischen oder metallischen Werkstoff besteht.

5. Verfahren nach einem der Ansprüche 1 bis 4, **dadurch gekennzeichnet, dass** die Längenmessung für ein, zwei oder alle drei Dimensionen (x, y, z) erfolgt.

6. Verfahren nach einem der Ansprüche 1 bis 5, **dadurch gekennzeichnet, dass** für die Bestimmung des Vergrößerungsfaktors eine Mittlung über die drei Dimensionen (x, y, z) erfolgt.

7. Verfahren nach Anspruch 1 bis 6, **dadurch gekennzeichnet, dass** eine Korrektur des Vergrößerungsfaktors für die einzelnen Dimensionen (x, y, z) über die vorab bestimmte Anisotropie der Schwindung erfolgt.

8. Verfahren nach einem der Ansprüche 1 bis 7, **dadurch gekennzeichnet, dass** der Vergrößerungsfaktor für jede Dimension (x, y, z) getrennt festgestellt wird und für die für jede Dimension (x, y, z) getrennte Berechnung des durch Bearbeitung des Rohlings (1) vergrößert herzustellenden Bauteils berücksichtigt wird.

9. Verfahren nach einem der Ansprüche 1 bis 8, **dadurch gekennzeichnet, dass** für die Bestimmung des Längenmaßes ($l_0$, $b_0$, $h_0$) in einer der Dimensionen (y) mehrere Längenmessungen in einem Abstand zueinander bezüglich mindestens einer anderen Dimension (x, z) vorgenommen werden und dass aus den mehreren Längenmessungen ein Längenmaß für die Dimension in dieser Richtung (y) bestimmt wird.

10. Verfahren nach einem der Ansprüche 1 bis 9, **dadurch gekennzeichnet, dass** auf dem Rohling (1) chargenbezogene Korrekturfaktoren für Unterschiede des Vergrößerungsfaktors in den einzelnen Dimensionen (x, y, z) erfassbar angebracht sind und dass diese Korrekturfaktoren bei der Ermittlung des Vergrößerungsfaktors in den einzelnen Dimensionen (x, y, z) berücksichtigt werden.

**Claims**

1. Method for machining a blank (1), wherein the blank (1) can be densely sintered with shrinkage following machining and wherein the machining of the blank (1) is carried out in a machining device (7) while taking into consideration an individual scale-up factor (F) relevant to the blank (1), in order to compensate for the shrinkage during dense sintering, **characterized in that** in order to determine the individual scale-up factor (F), a linear length measurement of the blank (1) is carried out in one or more of the dimensions: length, width, and height, wherein the individual scale-up factor (F) is computed from the measured longitudinal dimension ($l_0$, $b_0$, $h_0$ and a pre-known relationship between the longitudinal dimension and the scale-up factor, wherein the type of blank (1) is known, wherein the linear length measurement of the blank (1) is carried out in the machining device (7) by a touch probing operation on the blank (1) by means of a tool (8, 9) or by contactless scanning, wherein in order to determine the scale-up factor, a first longitudinal dimension ($l_0$ $b_0$, $h_0$) in a first dimension (y) is determined and that then if this longitudinal dimension is outside a tolerance range, at least one linear length measurement is carried out in at least one other dimension (x, z), and a scale-up factor is determined.

2. Method, as claimed in claim 1, **characterized in that** the pre-known relationship between the longitudinal dimension and the scale-up factor exists for a specific blank type of the blank (1), and the individual scale-up factor (F) is computed directly.

3. Method, as claimed in claim 1, **characterized in that** the pre-known relationship between the longitudinal dimension and the scale-up factor exists for a specific blank type of the blank (1), and the individual scale-up factor (F) is derived from a table.

4. Method, as claimed in any one of the claims 1 to 3, **characterized in that** the blank (1) has been presintered or merely compressed and that the blank (1) is made of a ceramic or metallic material.

5. Method, as claimed in any one of the claims 1 to 4, **characterized in that** the linear length measurement is carried out for one, two, or all three dimensions (x, y, z) .

6. Method, as claimed in any one of the claims 1 to 5, **characterized in that** in order to determine the scale-up factor, an averaging over the three dimensions (x, y, z) is carried out.

7. Method, as claimed in claim 1 to 6, **characterized in that** a correction of the scale-up factor for the individual dimensions (x, y, z) is carried out by means of the previously ascertained anisotropy of the shrinkage.

8. Method, as claimed in any one of the claims 1 to 7, **characterized in that** the scale-up factor is determined separately for each dimension (x, y, z) and is taken into account when computing, separately for each dimension (x, y, z), the dimensions of the overlarge item to be produced by machining the blank (1).

9. Method, as claimed in any one of the claims 1 to 8, **characterized in that** in order to determine the longitudinal dimension ($l_0$ $b_0$, $h_0$) in one of the dimensions (y), a plurality of linear length measurements are carried out at a distance from each other with respect to at least one other dimension (x, z) and that the plurality of linear length measurements are used to determine a longitudinal dimension for the dimension in this direction (y).

10. Method, as claimed in any one of the claims 1 to 9, **characterized in that** batch-related correction factors for differences in the scale-up factor in the individual dimensions (x, y, z) are detectably applied to the blank (1) and that these correction factors are taken into consideration when determining the scale-up factor in the individual dimensions (x, y, z).

## Revendications

1. Procédé d'usinage d'une ébauche (1), l'ébauche (1) pouvant être densifiée par frittage avec retrait après l'usinage, ledit usinage de l'ébauche (1) étant réalisé dans une machine d'usinage (7) avec prise en compte d'un facteur d'agrandissement (F) individuel lié à l'ébauche (1) pour la compensation du retrait lors de la densification par frittage, **caractérisé en ce que**, pour déterminer le facteur d'agrandissement (F) individuel, une mesure de longueur de l'ébauche (1) est réalisée dans une ou plusieurs des dimensions longueur, largeur et hauteur, le facteur d'agrandissement (F) individuel étant calculé à partir de la valeur de longueur mesurée ($l_0$, $b_0$, $h_0$) et d'une relation connue au préalable entre la valeur de longueur et le facteur d'agrandissement, le type de ladite ébauche (1) étant connu, la mesure de longueur de l'ébauche (1) étant réalisée dans la machine d'usinage (7) au moyen d'un processus de palpation d'un outil (8, 9) sur l'ébauche (1) ou par mesure sans contact, une première valeur de longueur ($l_0$, $b_0$, $h_0$) étant calculée dans une première dimension (y) afin de déterminer le facteur d'agrandissement, et **en ce que**, lorsque cette valeur de longueur se trouve en dehors d'une plage de tolérance, au moins une mesure de longueur dans au moins une autre dimension (x, z) est effectuée et un facteur d'agrandissement est déterminé.

2. Procédé selon la revendication 1, **caractérisé en ce que** la relation connue au préalable entre la valeur de longueur et le facteur d'agrandissement est valable pour un type d'ébauche défini de l'ébauche (1), et le facteur d'agrandissement (F) individuel est calculé directement.

3. Procédé selon la revendication 1, **caractérisé en ce que** la relation connue au préalable entre la valeur de longueur et le facteur d'agrandissement est valable pour un type d'ébauche défini de l'ébauche (1), et le facteur d'agrandissement (F) individuel est tiré d'un tableau.

4. Procédé selon l'une des revendications 1 à 3, **caractérisé en ce que** l'ébauche (1) est pré-frittée ou uniquement comprimée et **en ce que** l'ébauche (1) est constituée d'un matériau céramique ou métallique.

5. Procédé selon l'une des revendications 1 à 4, **caractérisé en ce que** la mesure de longueur est effectuée pour une, pour deux ou pour les trois dimensions (x, y, z).

6. Procédé selon l'une des revendications 1 à 5, **caractérisé en ce que**, pour la détermination du facteur d'agrandissement, une moyenne des trois dimensions (x, y, z) est calculée.

7. Procédé selon la revendication 1 à 6, **caractérisé en ce qu'**une correction du facteur d'agrandissement est effectuée pour les dimensions (x, y, z) individuelles à partir de l'anisotropie prédéfinie du retrait.

8. Procédé selon l'une des revendications 1 à 7, **caractérisé en ce que** le facteur d'agrandissement est établi de manière séparée pour chaque dimension (x, y, z) et est pris en compte pour le calcul, séparé pour chaque dimension (x, y, z), du composant à fabriquer agrandi par usinage de l'ébauche (1).

9. Procédé selon l'une des revendications 1 à 8, **caractérisé en ce que**, pour la détermination de la valeur de longueur ($l_0$, $b_0$, $h_0$) dans une des dimensions (y), plusieurs mesures de longueur sont réalisées à distance les unes des autres par rapport à au moins une autre dimension (x, z) et **en ce qu'**une valeur de longueur pour la dimension dans cette direction (y) est déterminée à partir desdites plusieurs mesures de longueur.

10. Procédé selon l'une des revendications 1 à 9, **caractérisé en ce que** des facteurs de correction liés à la fournée, relatifs à des différences de facteur d'agrandissement dans les dimensions (x, y, z) individuelles, sont appliqués de manière identifiable sur l'ébauche (1) et **en ce que** ces facteurs de correction sont pris en compte lors de la détermination du facteur d'agrandissement dans les dimensions (x, y, z) individuelles.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1067880 B1
- EP 0160797 A1
- WO 03007834 A1
- US 20070050072 A1
- US 4615678 A
- EP 1658825 A1
- WO 9913796 A